# EUROPÄISCHE PATENTSCHRIFT

(11) **EP 0 582 077 B1**
(45) Veröffentlichungstag und Bekanntmachung des Hinweises auf die Patenterteilung: **03.04.1996**
(21) Anmeldenummer: 93110155.4
(22) Anmeldetag: 25.06.1993
(51) Int. Cl.: F26B 23/02, F26B 13/10

(54) **Trocknungsanlage**
Drying plant
Installation de séchage

(30) Priorität: 07.08.1992 DE 4226107
(43) Veröffentlichungstag der Anmeldung: 09.02.1994
(73) Patentinhaber: VITS MASCHINENBAU GMBH, W-40764 Langenfeld (DE)
(72) Erfinder: Bulcsu, Istvan, D-40764 Langenfeld (DE)
(74) Vertreter: Planker, Karl-Josef, Dipl.-Phys.

(56) Entgegenhaltungen:
- EP-A- 0 326 227
- EP-A- 0 543 439
- DE-A- 2 412 446
- DE-A- 2 616 347
- DE-U- 8 115 801
- DE-U- 8 332 567
- US-A- 4 575 952

## Beschreibung

Die Erfindung betrifft eine Trocknungsanlage für durchlaufende Warenbahnen, welche beim Trocknen flüchtig werdende Lösemittel enthalten, insbesondere bedruckte und/oder beschichtete Papierbahnen, gemäß dem Oberbegriff des Patentanspruchs 1.

In den Trocknern für die genannten Produkte muß die Trocknungsluft auf einer Temperatur von etwa 200 °C gehalten werden, damit sich die Lösemittel verflüchtigen. Die Konzentration der Lösemitteldämpfe in der Trockneratmosphäre darf einen vorgegebenen Wert nicht überschreiten. Daher muß aus dem Trockner Abgas abgesaugt und durch eine entsprechende Menge Frischluft ersetzt werden. Die in dem Abgas enthaltenen Lösemitteldämpfe werden durch thermische Verbrennung in die unschädlichen Stoffe Kohlendioxid und Wasser umgewandelt. Die bei der thermischen Verbrennung freiwerdende erhebliche Wärmemenge wird bei bekannten Trocknungsanlagen teilweise zurückgewonnen, indem man das über 700 °C heiße Reingas teilweise in den Trockner zurückführt und/oder zur Erhitzung eines Wärmeträgers benutzt, der zum Beispiel zur Beheizung der Trockneratmosphäre dient. Die Wärmebilanz ist umso günstiger, je geringer die in die Atmosphäre ausgestoßene Reingasmenge und je niedriger ihre Temperatur ist.

Eine Trocknungsanlage gemäß dem Oberbegriff des Patentanspruchs 1 ist durch das DE-GM 81 15 801 bekannt. Dabei mündet das vom Kühltunnel ausgehende Ansaugrohr in den vom Trockner zur Sekundärseite des ersten Wärmetauschers geführten Kanalabschnitt ein. Durch die Beimischung der über den Kühltunnel angesaugten Luft wird der Abgasstrom vergrößert und abgekühlt. Ein Gebläse fördert das Abgasgemisch zu dem ersten Wärmetauscher und zur Brennkammer. Der gesamte aus der Brennkammer austretende Reingasstrom wird zunächst der Primärseite des ersten Wärmetauschers und nach Abkühlung auf etwa 500 °C der Primärseite des zweiten Wärmetauschers zugeführt. Von dort wird der gesamte Reingasstrom nach weiterer Abkühlung in die Atmosphäre ausgestoßen. Um bei den großen Gasmengen einen hohen Wärmeruckgewinn zu erzielen, sind große Wärmetauscher erforderlich.

Von der soeben beschriebenen Trocknungsanlage unterscheidet sich eine vergleichbare, durch die DE-PS 26 16 347 bekannt gewordene Trocknungsanlage insbesondere dadurch, daß sie nur einen einzigen Wärmetauscher umfaßt. Ein vom Kühltunnel ausgehender Ansaugkanal mündet - wie bei der zuerst genannten Druckschrift - in einen Abgaskanal ein, der den Trockner mit der Sekundärseite des Wärmetauschers verbindet. Von dort ist der Abgaskanal zum Eingang der Brennkammer und von deren Ausgang über die Primärseite des Wärmetauschers zu einem Kamin weitergeführt. Vom Ausgang der Brennkammer ist eine Abzweigleitung zu den Düsenkästen des Trockners zurückgeführt. Auch hierbei wird also der sekundärseitig durch den Wärmetauscher fließende Massenstrom vorher vergrößert und abgekühlt. Der Teilstrom, der die Primärseite des Wärmetauschers durchströmt, wird dort zum Beispiel auf 300 °C abgekühlt. Die primärseitige Ausgangstemperatur, die für den Wärmeverlust maßgebend ist, kann jedenfalls nicht niedriger liegen als die sekundärseitige Eingangstemperatur. Um eine niedrige Reingastemperatur zu erreichen, ist ein großer Wärmetauscher erforderlich.

Ein Nachteil dieser bekannten Trocknungsanlage besteht darin, daß der Gasstrom, der den Düsenkästen zugeführt wird, sehr heiß ist, nämlich über 700 °C. Das halten die Zuleitungen und die Düsen nicht lange aus.

Aus der EP-A1-0 326 228 ist eine Vorrichtung zum Beheizen eines Trockners und zur Verbrennung der im Abgas enthaltenen Lösemitteldämpfe bekannt, bei der ein Wärmetauscher mit einer Brennkammer zu einer langgestreckten, kompakten Baueinheit integriert ist. In einem gemeinsamen Gehäuse schließt sich an den Wärmetauscher die Brennkammer an, welche zwei haarnadelförmig angeordnete Gaszüge aufweist. Die Brennkammer ist mit einer Auslaßöffnung für einen Teilstrom des Reingases versehen, der zur Aufheizung der Trockneratmosphäre dient. Die Baueinheit kann innerhalb des Trockners angeordnet werden. In diesem Fall sind aber der Dimensionierung des Wärmetauschers Grenzen gesetzt. Unter den Bedingungen der Praxis dürfte daher die Abwärmenutzung geringer sein als bei den vorerwähnten Trocknungsanlagen.

Der Erfindung liegt die Aufgabe zugrunde, eine Trocknungsanlage gemäß dem Oberbegriff des Anspruchs 1 zu verbessern, so daß mit verkleinerten Wärmetauschern eine verbesserte Wärmerückgewinnung erzielt wird.

Diese Aufgabe wird gemäß der Erfindung durch die im Kennzeichen des Anspruchs 1 angegebenen Merkmale gelöst.

Der Sekundärseite des ersten Wärmetauschers wird das aus dem Trockner abgezogene Abgas zugeführt, ohne Beimischung der über den Kühltunnel angesaugten Luft. Ein Teil des Reingases wird im Kreislauf in den Trockner zurückgeführt. Daher ist der verbleibende Reingasteilstrom, der die Primärseite des ersten Wärmetauschers durchströmt, kleiner als der sekundärseitige Abgasstrom.

Er kühlt sich entsprechend dem Verhältnis der Massenströme stärker ab, so daß mit einem relativ kleinen ersten Wärmetauscher eine Temperaturabsenkung auf unter 300 °C erreichbar ist. Der zum zweiten Wärmetauscher gelangende Reingasteilstrom ist also im Vergleich zum Stand der Technik nicht nur wesentlich kleiner, sondern auch wesentlich kühler. Sekundärseitig wird dem zweiten Wärmetauscher eine relativ kleine, bereits - wenn auch nur geringfügig - vorgewärmte Luftmenge zugeführt, und es genügt eine Aufheizung auf etwa 200 °C. Daher kann auch der zweite Wärmetauscher wesentlich kleiner ausgebildet werden. Die mit einer Temperatur von nur rund 150 °C in die Atmosphäre ausgestoßene Reingasmenge umfaßt nur einen Teil - zum Beispiel etwa die Hälfte - der aus dem Trockner abgezogenen Abgasmenge. Daher ist der Wärmeverlust sehr gering. Ein weiterer Vorteil besteht darin, daß bei unterschiedlichen Produktionsbedingungen die Öldampfkonzentration in der Trockneratmosphäre in einfacher Weise konstant gehalten werden kann, indem man je nach der Menge der pro Zeiteinheit frei werdenden Lösemitteldämpfe die aus dem Trockner abgezogene Abgasmenge und die Teilmenge des rückgeführten Reingases variiert.

Durch das Merkmal des Anspruchs 2 läßt sich das Eindringen von kalter Umgebungsluft am Eintrittsschlitz nahezu vollständig unterbinden.

Durch die Merkmale der Ansprüche 3 und 4 werden die Wärmeverluste verkleinert.

Das Merkmal des Anspruchs 5 hat konstruktive Vorteile.

Durch das Merkmal des Anspruchs 6 wird die Warenbahn bereits vorgekühlt, bevor sie die erste Kühlwalze erreicht.

Die Zeichnung dient zur Erläuterung der Erfindung anhand eines Ausführungsbeispiels.

Figur 1 veranschaulicht schematisch den Verlauf der Gasströme.

Figur 2 zeigt vereinfacht den Aufbau einer Trocknungsanlage ge-mäß der Erfindung.

Figur 3 zeigt im Schnitt die am Eintrittsschlitz angeordneten Düsenkästen in größerem Maßstab.

Figur 4 zeigt einen senkrechten Längsschnitt durch den Kühltunnel.

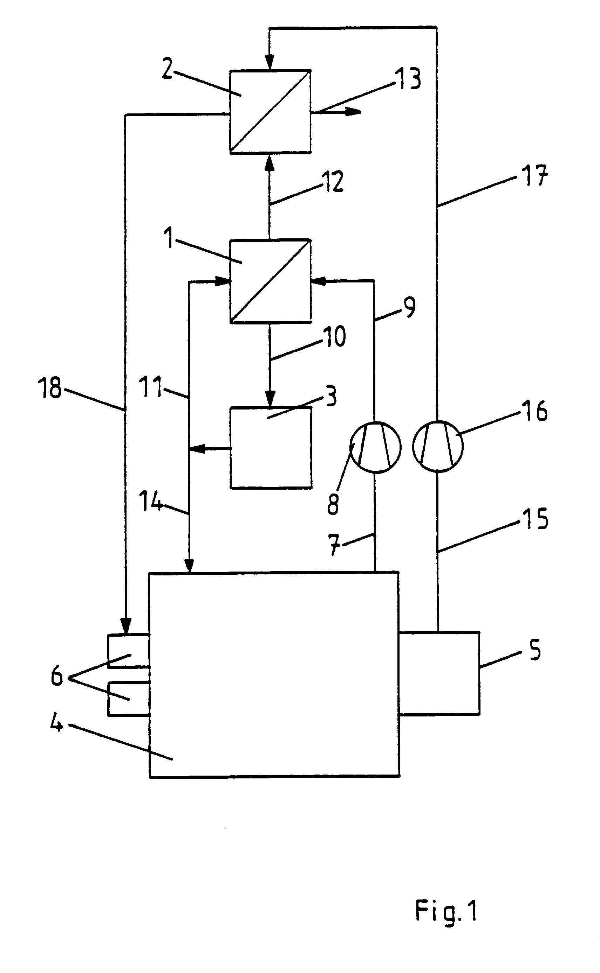

Wie die Figur 1 besonders deutlich zeigt, umfaßt die Trocknungsanlage einen ersten Wärmetauscher 1, einen zweiten Wärmetauscher 2, eine Brennkammer 3 und einen Trockner 4 mit unmittelbar anschließendem Kühltunnel 5. Beiderseits des Eintrittsschlitzes sind Düsenkästen 6 angeordnet. Entsprechende, am Austrittsschlitz angeordnete Düsenkästen sind der Einfachheit und Übersichtlichkeit halber in Figur 1 nicht dargestellt.

Abgas mit einer Temperatur von etwa 200 °C wird gemäß Linie 7 durch ein Absauggebläse 8 aus dem Trockner 4 abgesaugt und gemäß Linie 9 der Sekundärseite des Wärmetauschers 1 zugeführt. Dabei wird unter "Sekundärseite" diejenige Seite verstanden, die von dem Wärme aufnehmenden Gasstrom durchflossen wird. Entsprechend wird die von dem Wärme abgebenden Gasstrom durchflossene Seite als "Primärseite" bezeichnet. Gemäß Linie 10 gelangt das auf etwa 500 °C vorgewärmte Abgas anschließend zu der Brennkammer 3. Ein Teilstrom des aus der Brennkammer 3 austretenden, durch Verbrennung der flüchtigen Substanzen auf über 700 °C erhitzten Reingasstroms wird gemäß Linie 11 der Primärseite des Wärmetauschers 1 zugeführt, wo er einen Teil seiner Wärme an das zufließende Abgas abgibt und sich dabei auf unter 300 °C abkühlt.

Wie durch Linie 12 veranschaulicht, gelangt das Reingas anschließend zur Primärseite des Wärmetauschers 2 und nach Abkühlung auf 150 °C von dort gemäß Linie 13 zu einem Kamin (29), von dem es in die Atmosphäre ausgestoßen wird.

Über eine direkte, durch die Linie 14 veranschaulichte Verbindung wird ein Teil des heißen Reingases direkt in den Trockner zurückgeführt.

Über den Kühltunnel 5 wird gemäß Linie 15 durch einen Ansaugventilator 16 Luft angesaugt und, wie durch die Linie 17 veranschaulicht, der Sekundärseite des Wärmetauschers 2 zugeführt. Dort wird sie auf etwa 200 °C aufgeheizt und gelangt anschliessend zu den Düsenkästen 6, wie durch die Linie 18 symbolisch dargestellt.

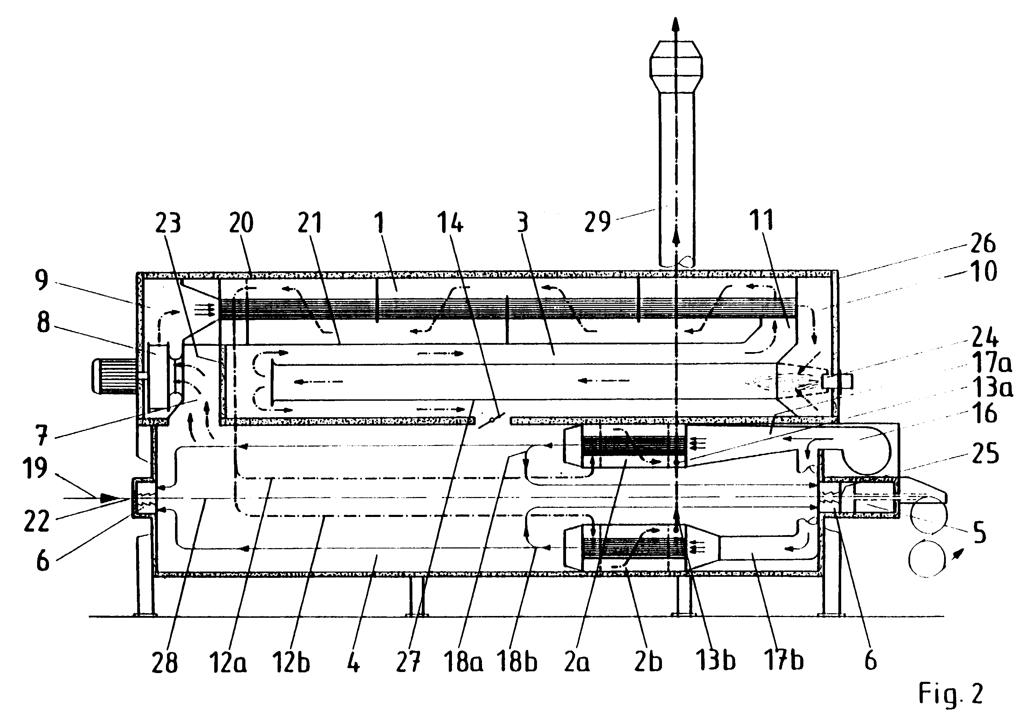

Diejenigen Teile der Figur 2, die in Figur 1 durch Symbole dargestellt sind, haben in Figur 2 das gleiche Bezugszeichen wie das entsprechende Symbol der Figur 1.

Der Trockner 4 besteht aus mehreren Feldern, die in der durch den Pfeil 19 symbolisierten Durchlaufrichtung aneinander gereiht sind. Jedes Feld ist in bekannter Weise mit Düsenkästen zur schwebenden Führung der Warenbahn ausgestattet, denen Umluftventilatoren und gegebenenfalls Heizeinrichtungen zugeordnet sind. In einer separaten Kammer 20, die oben auf dem Trockner 4 sitzt und von dem Trockner durch einen waagerechten Zwischenboden getrennt ist, sind Wärmetauscher 1 und Brennkammer 3 untergebracht. Die Brennkammer 3 hat ein langgestrecktes Gehäuse 21, dessen dem Eintrittsschlitz 22 benachbartes Ende durch eine Stirnwand 23 geschlossen ist. Sie umfaßt einen Brenner 24, der in der dem Austrittsschlitz 25 benachbarten Stirnwand 26 befestigt ist, und ein von dem Brenner 24 ausgehendes, nahezu bis an die Stirnwand 23 mit seitlichem Abstand in das Gehäuse 21 hineinragendes Glührohr 27.

Der über der Brennkammer 3 angeordnete Wärmetauscher 1 ist als Rohrbündelwärmetauscher ausgebildet, wobei die Gesamtheit der Rohrkanäle die Sekundärseite bildet. Der zweite Wärmetauscher besteht aus zwei Einheiten 2a, 2b, die innerhalb des Trockners 4 untergebracht sind. Sie sind ebenfalls als Rohrbündelwärmetauscher ausgebildet.

Die eine Einheit 2a ist oberhalb der Bahnführungsebene 28 angeordnet, die andere Einheit 2b darunter.

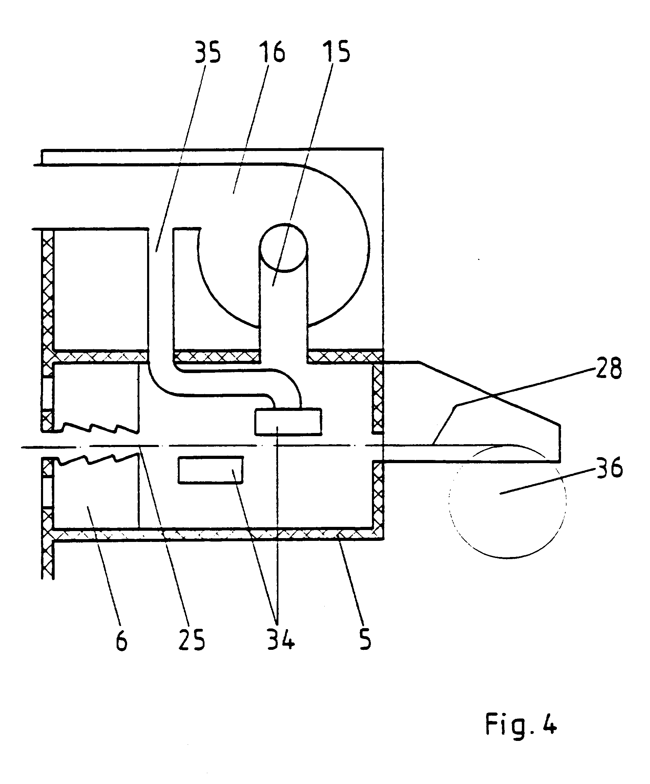

Primärseitig sind die Einheiten 2a, 2b durch Rohrleitungen 12a, 12b an die Primärseite des Wärmetauschers 1 angeschlossen und durch Leitungen 13a, 13b mit dem Kamin 29 verbunden. Sekundärseitig sind sie einerseits durch Stutzen 17a, 17b mit dem Ansauggebläse 16, welches - wie in Figur 4 besser erkennbar - saugseitig mit dem Innenraum des Kühltunnels 5 in Verbindung steht, andererseits durch Rohre 18a, 18b mit den Düsenkästen 6 verbunden, die am Eintritts- und Austrittsschlitz 22, 25 angeordnet sind.

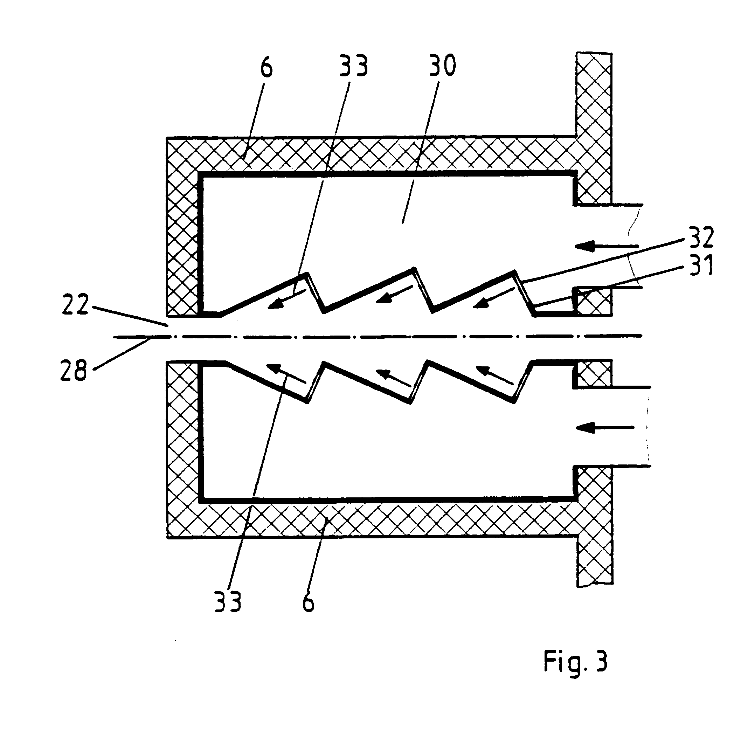

Wie Figur 3 zeigt, ist die der Bahnführungsebene 28 zugekehrte Wand des Düsenkastens 6 im Schnitt sägezahnförmig profiliert. Die steileren, dem Eintrittsschlitz 22 zugewandten Flanken 31 der Sägezähne sind mit Düsenöffnungen 32 versehen, so daß die durch Pfeile 33 veranschaulichten Blasstrahlen spitzwinklig zur Bahnführungsebene 28 auf den Eintrittsschlitz 22 gerichtet sind. Bei passender Abstimmung zwischen der Austrittsgeschwindigkeit der Blasstrahlen und dem im Innern des Trockners 4 bestehenden Unterdruck läßt sich das Eindringen von kalter Umgebungsluft durch den Eintrittsschlitz 22 praktisch vollständig unterbinden. Am Austrittsschlitz 25 ist im wesentlichen der gleiche Düsenkasten 6 angeordnet. Die erforderliche Frischluftmenge wird zum größten Teil über den Kühltunnel 5 angesaugt. Dadurch wird in diesem Bereich die Konzentration des nachverdampften Lösemittels niedrig gehalten.

Dadurch wird die Kondensation auf den Kühlwalzen weitgehend vermieden.

Gemäß Figur 4 sind in dem Kühltunnel 5 oberhalb und unterhalb der Bahnführungsebene 28 Düsenkästen 34 mit Luftkissendüsen angeordnet. Sie stehen durch ein Leitungssystem 35 mit der Druckseite des Ansauggebläses 16 in Verbindung. Durch intensive Beaufschlagung mit rückgeführter Luft erfolgt bereits eine Vorkühlung der Warenbahn, bevor diese die erste Kühlwalze 36 erreicht.

## Patentansprüche

1. Trocknungsanlage für durchlaufende Warenbahnen, welche beim Trocknen flüchtig werdende Lösemittel enthalten, insbesondere für bedruckte und/oder beschichtete Papierbahnen,
mit einem Trockner (4), der im Innern mit Düsen und Umluftventilatoren zum Aufblasen bzw. Umwälzen eines heißen Behandlungsmediums ausgestattet ist und beiderseits des Eintritts- und Austrittsschlitzes (22,25) zusätzliche Düsenkästen (6) aufweist,
mit einem unmittelbar an den Trockner (4) anschließenden Kühltunnel (5),
mit einer Brennkammer (3) zur thermischen Verbrennung beim Trocknen flüchtig gewordener Lösemittel,
mit einem ersten (1) und einem zweiten Wärmetauscher (2),
mit einem von dem Trockner (4) ausgehenden, über die Sekundärseite des ersten Wärmetauschers (1) zum Eingang der Brennkammer (3) und von deren Ausgang über die Primärseite des ersten Wärmetauschers (1) und die Primärseite des zweiten Wärmetauschers (2) zu einem Kamin (29) geführten Abgaskanal,
mit einem von dem Kühltunnel (5) ausgehenden Ansaugrohr (15),
und mit einer über die Sekundärseite des zweiten Wärmetauschers (2) zu den Düsenkästen geführten Zuleitung für vorgewärmte Behandlungsluft,
dadurch gekennzeichnet,
daß zwischen dem Ausgang der Brennkammer (3) und dem Trockner (4) eine Verbindung (14) besteht
und daß das Ansaugrohr (15) zu einem eigenen Ansauggebläse (16) geführt ist, welches druckseitig mit der Sekundärseite des zweiten Wärmetauschers (2) verbunden ist.

2. Trocknungsanlage nach Anspruch 1, dadurch gekennzeichnet, daß der Düsenkasten (6) Düsenöffnungen (32) aufweist, deren Blasrichtung spitzwinklig zur Bahnführungsebene (28) auf den Eintrittsschlitz (22) gerichtet ist.

3. Trocknungsanlage nach Anspruch 1 oder 2, dadurch gekennzeichnet, daß der erste Wärmetauscher (1) mit der Brennkammer (3) zu einer unmittelbar über dem Trockner (4) angeordneten Baueinheit zusammengefaßt ist.

4. Trocknungsanlage nach einem der Ansprüche 1 bis 3, dadurch gekennzeichnet, daß der zweite Wärmetauscher (2) in der Trocknungskammer (4) untergebracht ist.

5. Trocknungsanlage nach Anspruch 4, dadurch gekennzeichnet, daß der zweite Wärmetauscher (2) aus zwei Einheiten (2a, 2b) besteht, von denen die eine unter der Bahnführungsebene (28) und die andere über der Bahnführungsebene (28) angeordnet ist.

6. Trocknungsanlage nach einem der Ansprüche 1 bis 5, dadurch gekennzeichnet, daß in dem Kühltunnel (5) oberhalb und unterhalb der Bahnführungsebene (28) Düsenkästen (34) angeordnet sind, die durch ein Leitungssystem (35) mit der Druckseite des Ansaugventilators (16) verbunden sind.

## Claims

1. A drying plant for webs of material passing through and containing solvents volatilising during drying, in particular for printed and/or coated webs of paper,
comprising a dryer (4) equipped internally with nozzles and air-circulating fans for blowing or circulating a hot treatment medium, and having additional nozzle boxes (6) on both sides of the inlet and outlet slot (22, 25),
a cooling tunnel (5) directly attached to the dryer (4),
a combustion chamber (3) for thermal combustion during the drying process of volatilised solvents,
a first (1) and a second (2) heat exchanger,
a flue duct from the dryer (4) extending across the secondary side of the first heat exchanger (1) to the inlet of the combustion chamber (3) and from the outlet thereof across the primary side of the first heat exchanger (1) and the primary side of the second heat exchanger (2) to a chimney (29),
a suction pipe (15) starting from the cooling tunnel (5),
and a feed pipe, for preheated treatment air, extending across the secondary side of the second heat exchanger (2) to the nozzle casing,
**characterised in that**
there is a connection (14) between the outlet of the combustion chamber (3) and the dryer (4),
and the suction pipe (15) extends to a separate suction blower (16) connected on the delivery side to the secondary side of the second heat exchanger (2).

2. A drying plant according to Claim 1, **characterised in that** the nozzle box (6) has nozzle apertures (32), the blowing direction thereof being directed to the inlet slot (22) at an acute angle to the web guide surface (28).

3. A drying plant according to Claim 1 or 2, **characterised in that** the first heat exchanger (1) is integrated with the combustion chamber (3) to form one component arranged directly above the dryer (4).

4. A drying plant according to any of claims 1 to 3, **characterised in that** the second heat exchanger (2) is accommodated in the drying chamber (4).

5. A drying plant according to Claim 4, **characterised in that** the second heat exchanger (2) comprises two units (2a, 2b), one being arranged under the web guide surface (28) and the other above the web guide surface (28).

6. A drying plant according to any one of claims 1 to 5, **characterised in that** nozzle boxes (34) are arranged in the cooling tunnel (5) above and below the web guide surface (28) and are connected to the delivery side of a suction fan (16) by a pipe system (35).

## Revendications

1. Installation de séchage pour des bandes de matière continues, qui contiennent, lors du séchage, des solvants devenant volatils, en particulier pour des bandes de papier imprimées et/ou enduites, comprenant,
un séchoir (4), qui, à l'intérieur, est équipé de tuyères et de ventilateurs de circulation d'air pour le soufflage et respectivement la circulation d'un milieu de traitement chaud et qui présente des caissons à tuyères supplémentaires (6) de part et d'autre de la fente d'entrée et de la fente de sortie (22, 25),
un tunnel de refroidissement (5) directement raccordé au séchoir (4),
une chambre de combustion (3) pour la combustion thermique des solvants devenus volatils au cours du séchage,
un premier échangeur de chaleur (1) et un deuxième (2),
un canal à gaz d'échappement partant du séchoir (4), qui est guidé par le côté secondaire du premier échangeur de chaleur (1) vers l'entrée de la chambre de combustion (3) et à partir de la sortie de celle-ci par le côté primaire du premier échangeur de chaleur (1) et le côté primaire du deuxième échangeur de chaleur (2) vers une cheminée (29),
un tube d'aspiration (15) partant du tunnel de refroidissement (5), et
un conduit d'amenée pour de l'air de traitement préchauffé qui est guidé par le côté secondaire du deuxième échangeur de chaleur (2) vers les caissons à tuyères,
caractérisée en ce qu'une communication (14) existe entre la sortie de la chambre de combustion (3) et le séchoir (4), et en ce que le tube d'aspiration (15) est guidé vers un ventilateur d'aspiration propre (16) qui, du côté refoulement, est en communication avec le côté secondaire du deuxième échangeur de chaleur (2).

2. Installation de séchage suivant la revendication 1, caractérisée en ce que le caisson à tuyères (6) présente des orifices (32) dont le sens de soufflage est dirigé vers la fente d'entrée (22), à angle aigu par rapport au plan de guidage de bande (28).

3. Installation de séchage suivant l'une des revendications 1 et 2, caractérisée en ce que le premier échangeur de chaleur (1) est assemblé avec la chambre de combustion (3) en une unité de construction directement disposée au-dessus du séchoir (4).

4. Installation de séchage suivant l'une des revendications 1 à 3, caractérisée en ce que le deuxième échangeur de chaleur (2) est logé dans la chambre de séchage (4).

5. Installation de séchage suivant la revendication 4, caractérisée en ce que le deuxième échangeur de chaleur (2) est constitué de deux unités (2a, 2b) dont l'une est agencée en dessous du plan de guidage de bande (28) et l'autre au-dessus du plan de guidage de bande (28).

6. Installation de séchage suivant l'une des revendications 1 à 5, caractérisée en ce que des caissons à tuyères (34), qui sont en communication avec le côté refoulement du ventilateur d'aspiration (16) par un système de conduits (35), sont agencés dans le tunnel de refroidissement (5) au-dessus et en dessous du plan de guidage de bande (28).
